# EUROPEAN PATENT SPECIFICATION

(11) **EP 0 412 170 B1**
(45) Date of publication and mention of the grant of the patent: **02.11.1995**
(21) Application number: 90903425.8
(22) Date of filing: 22.02.1990
(51) Int. Cl.: B60C 11/16

(54) **ANTI-SKID PIN UNIT AND ANTI-SKID TIRE USING THE SAME**
GLEITSCHUTZSTIFTEINHEIT UND RUTSCHSICHERER REIFEN, DER DIESE EINHEIT AUFWEIST
UNITE DE CLOU ANTIDERAPANT ET PNEU ANTIDERAPANT L'UTILISANT

(30) Priority: 23.02.1989 JP 144275/89
(43) Date of publication of application: 13.02.1991
(73) Proprietor: HOJO, Hiroo, Nagano 380 (JP)
(72) Inventor: HOJO, Hiroo, Nagano 380 (JP)
(74) Representative: Linn, Samuel Jonathan
(86) International application number: PCT/JP90/00217
(87) International publication number: WO 90/09899

(56) References cited:
- EP-A- 0 095 007
- WO-A-88/06538
- DE-A- 2 337 587
- JP-A-59 186 704
- JP-A-61 268 506
- JP-B- 4 513 601
- US-A- 3 583 462

## Description

The present invention relates to a stud unit and a skid-proof tire having the stud units for preventing vehicles from slipping on snow- or ice-covered roads.

Conventionally, snow tires having multiple studs on the outer circumferential face are used as skid-proof tires.

However, studs of the snow tires grind the surface of roads when vehicles having the snow tires run on a dry road surface. Powdered dust is shaved from roads by the studs of the snow tires and blown up into the atmosphere to cause air pollution. The powdered dust is also harmful to health because it includes harmful heavy metals such as cadmium, lead, etc. Furthermore, traffic signs painted on roads are shaved off by the tire studs and this could be a factor in traffic accidents. In addition expenditure is required for repairing the road signs. In an attempt to solve the above noted disadvantages, recently, studless-tires are being used. A studless-tire, suitable as a snow tire, is made of special composed rubber which does not become hard even in low temperature. The studless-tire also has multiple narrow grooves on the outer circumferential face thereof so as to increase the contact area which contact the road and increase frictional resistance therebetween. However, the frictional resistance of the studless-tire is not less than conventional snow tires having studs when the temperature is quite low; the frictional resistance of the studless-tire decrease when the temperature comes close to 0°C. The frictional function is not stable due to condition of ice or snow on the road. Mixing a low-temperature plasticizer with tire rubber to soften treads of tires at low temperature is known but this character continues for only about one year, and after that the tread becomes quite hard.

As another option, snow and ice on roads is melted by spraying calcium chloride, etc. thereon but this has disadvantages in that roadside trees are blighted and another secondary pollution such as water pollution also occurs.

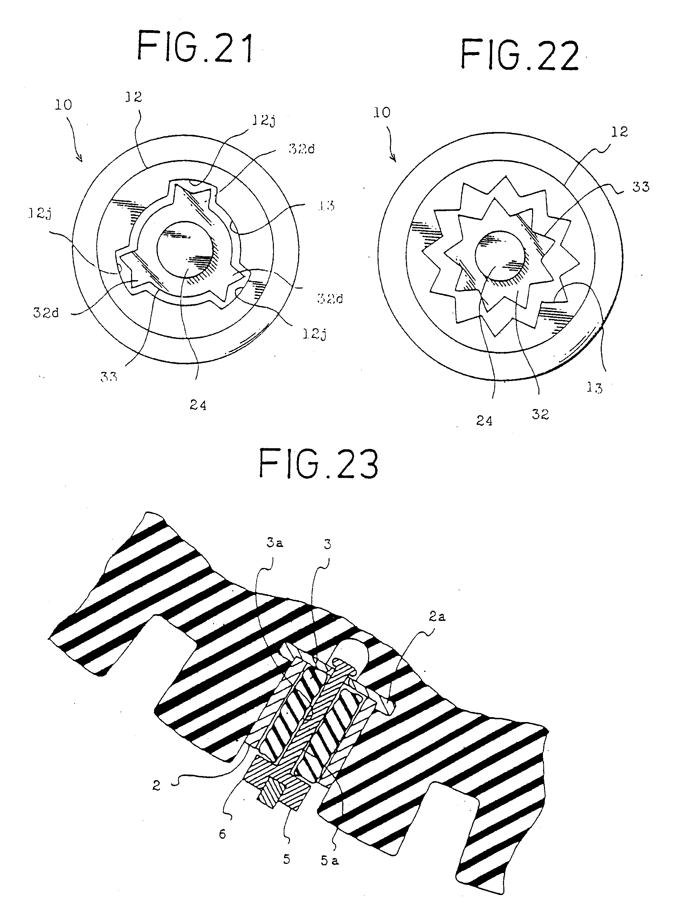

To solve these disadvantages, a skid-proof tire having stud units was disclosed in the Japanese Patent Provisional Publication (Kokai) Gazette No.59-186704. Each stud unit thereof shown in Fig. 23 has a cylinder 2 and an elastic member 3 such as rubber therein. A stud 5 is passed through a hole 3a, which is bored in the center of the elastic member 3. The rear end of the stud 5 is engaged with a bottom face 2a of the cylinder 2. There is formed a large-neck section 6 at the front end of the stud 5, and the large-neck section 6 is projected forward from the front opening of the cylinder 2.

When running a vehicle having tires with many studs 5 on a road, each stud 5 is inclined and the large-neck section 6 engages with the fringe of the opening of the cylinder 2 to keep the status of the stud 5 when the brake is applied. The front end of each stud 5 projects from the tread face of the tires until the vehicle stops, so that the surface of the road is only lightly ground.

It is necessary to design the unit so that the diameter of the shaft of the stud 5 is large because a heavy force in the inclining direction acts on the stud 5 when the vehicle accelerates or applies the brake. However, if the shaft of the stud 5 is increased, the elastic member 3 and the cylinder 2 must also be increased, which makes each stud unit heavy.

When the inclination of the stud 5 is adjusted by inserting the elastic member 3 between the cylinder 2 and the stud 5, the elastic member 3 is sometimes clipped between the jaw section of the large-neck section 6 and the fringe of the opening of the cylinder 2 when the stud 5 is inclined.

The elastic member is apt to be transformed by frequent inclination of the stud 5, so that the stud 5 sometimes cannot be returned to a central position within the cylinder. Therefore, the durability and stability of the elastic member 3 are low. Further, studs made of shape-memory alloy are proposed so as to project and to retract by themselves but they have problems about stable function, cost, and durability, so that they have not been realised.

Stud units of the aforementioned type are also disclosed in EP-A-0095007. This concerns a skid proof tire having stud units comprising a hollow alloy sleeve which carries a carbide stud and a resilient element to bias the end of the stud to project from the sleeve. This document discusses the various types of materials which can be used to make the studs and sleeves so as to inhibit premature enlargement of the sleeve through-hole. If desired, the sleeve may be provided with a polygonal central through-hole, rather than a circular one, to assist removal of dirt and water trapped between the stud and sleeve.

An object of the present invention is to provide a stud unit, which is capable of adjusting the function of a stud with respect to condition of roads according to the coefficient of the friction thereof, and a skid-proof tire having the stud unit. Accordingly, in one aspect the present invention provides a stud unit as defined in the accompanying claim 1.

In another aspect the present invention provides a skid-proof tire as defined in the accompanying claim 7.

If a vehicle having such skid-proof tires runs on a dry road at fixed speed, the stud is pushed into the cylinder against the elasticity of the elastic member by the weight of the vehicle when the stud contacts the surface of the road. The stud projects from the outer circumferential face of the tire because the stopper section of the stud is biased by the elastic member when the stud leaves from the surface of the road.

When the brakes of the vehicle are applied on a dry road, treads of each tire grip the surface of the road and no strong force acts on the studs contacting the road, so that the studs are pushed into the cylinders and the road is not damaged.

While on a snow- or ice-covered road, a force corresponding to the braking action acts on the stud causing it to incline, so that the projected line on the outer circumferential face of the stud engages with the engage section of the projected line on the inner face of the cylinder, which is formed at the fringe of the opening thereof. With this engagement, the stud is certainly kept its front end projecting from the cylinder, so that the skid-proof efficiency is raised. Namely, the stud is projected by the horizontal force, and frictional resistance is secured by the stud. The force for inclining the stud is in proportion to the speed of the vehicle. In addition the engaging force and projecting length of the stud vary in accordance with the vehicle speed.

The stopper section at the rear end of the stud is biased by the elastic member, so that it is unnecessary to insert rubber, etc. between the cylinder and the stud, as required in conventional stud units. Since there is no rubber between the stud and cylinder, the diameter of the stud can be made relatively larger and can be sufficiently hard without increasing the diameter of the cylinder.

### BRIEF DESCRIPTION OF THE DRAWINGS

Embodiments of the present invention will now be described by way of examples and with reference to the accompanying drawings, in which:

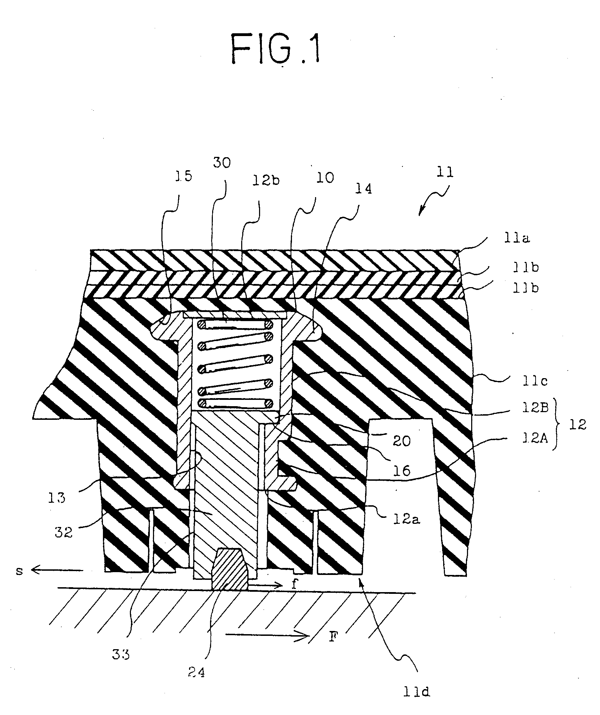

Fig. 1 shows a sectional view of a part of a skid-proof tire according to an embodiment of the present invention;
Fig. 2 shows a partially cutaway view in perspective of a tire;
Fig. 3 shows a partial plan view of a tire in which stud units are fixed in a tread;
Fig. 4 shows a perspective view of the stud;
Fig. 5 shows a partial sectional view of the tire whose stud unit contacts a road;
Fig. 6 shows a partial sectional view of the tire when brake is applied;
Fig. 7 shows another form of tip for a stud unit;
Fig. 8 shows a longitudinal] sectional view of a stud unit according to another embodiment having a hard mouth piece at the fringe of the opening of the cylinder;
Fig. 9 shows a longitudinal sectional view of a stud unit which has an engage step formed at the midway and on the all round circumferential face thereof;
Fig. 10 is a partial sectional view of a stud supporting mechanism;
Fig. 11 is a bottom view of the stud supporting mechanism;
Fig. 12 is a bottom view showing the projected lines on the stud for another stud unit;
Fig. 13 is a longitudinal sectional view of a stud having no projected line on the front end section;
Fig. 14 shows a longitudinal sectional view of the stud unit whose spring is located another position;
Figs. 15-22 illustrate projected lines of various shapes for stud units; and
Fig. 23 shows a partial sectional view of a conventional snow tire with studs.

Preferred embodiments of the present invention will now be described with reference to the accompanying drawings.

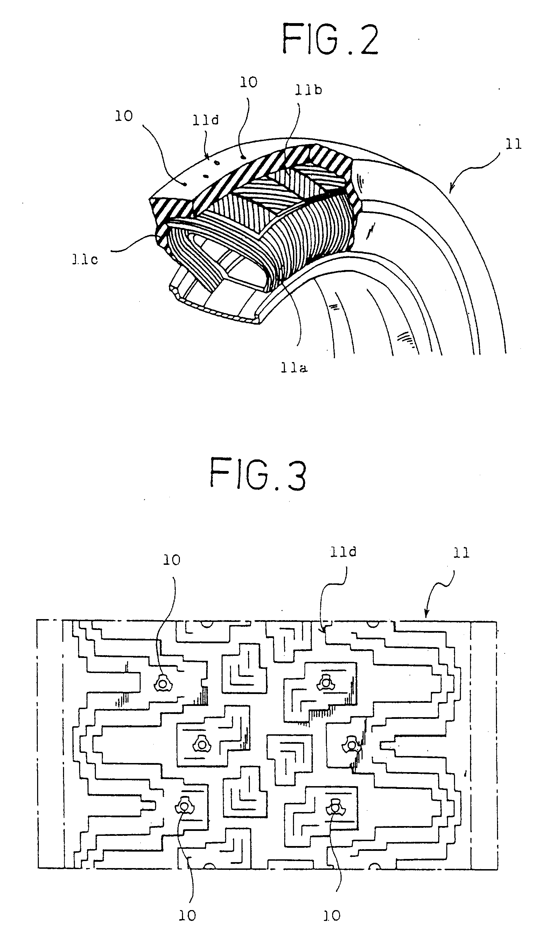

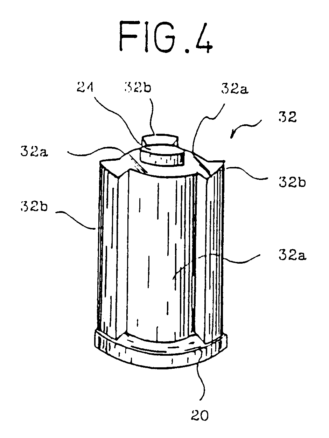

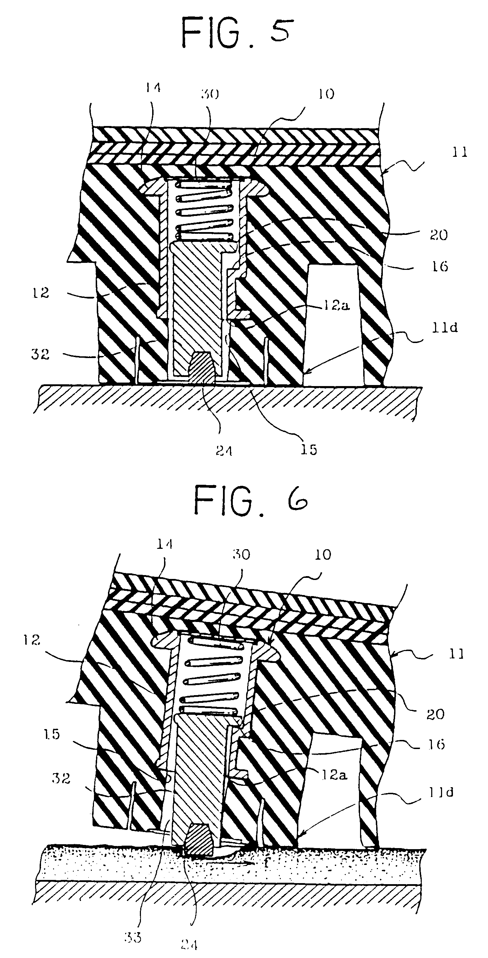

A tire 11 is composed of, as shown in Fig. 2, a carcass 11a, breakers 11b piled as several layers on the outer face of the carcass 11a and a rubber layer 11c piled on the outer face of the breakers 11b. The rubber layer 11c is formed thick so as to support weight of a vehicle and to bear shocks and friction. There is formed a tread 11d on the outer circumferential face of the rubber layer 11c.

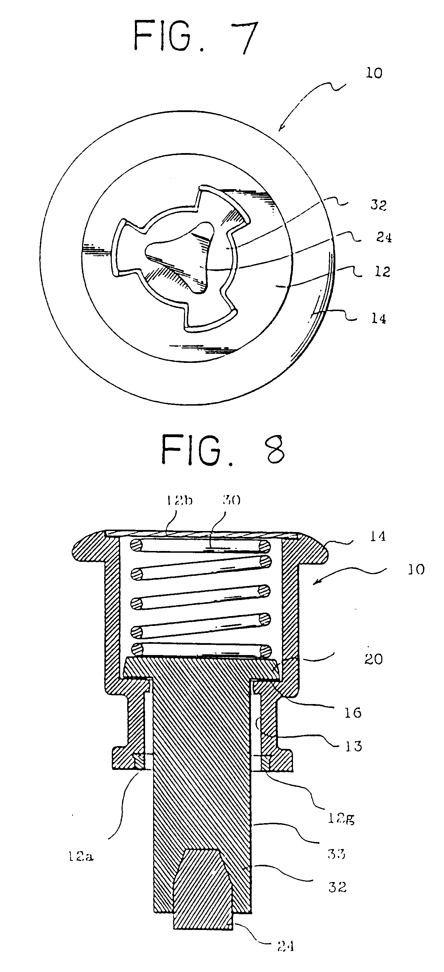

Multiple holes 15 are bored in all treads 11d, and stud units 10 are respectively fixed into the holes 15 (see Fig. 3).

A cylinder 12 of each stud unit 10 has a flange section 14 at the rear end (the end on the tire-center side). A stud 32 is inserted into each cylinder 12 with play.

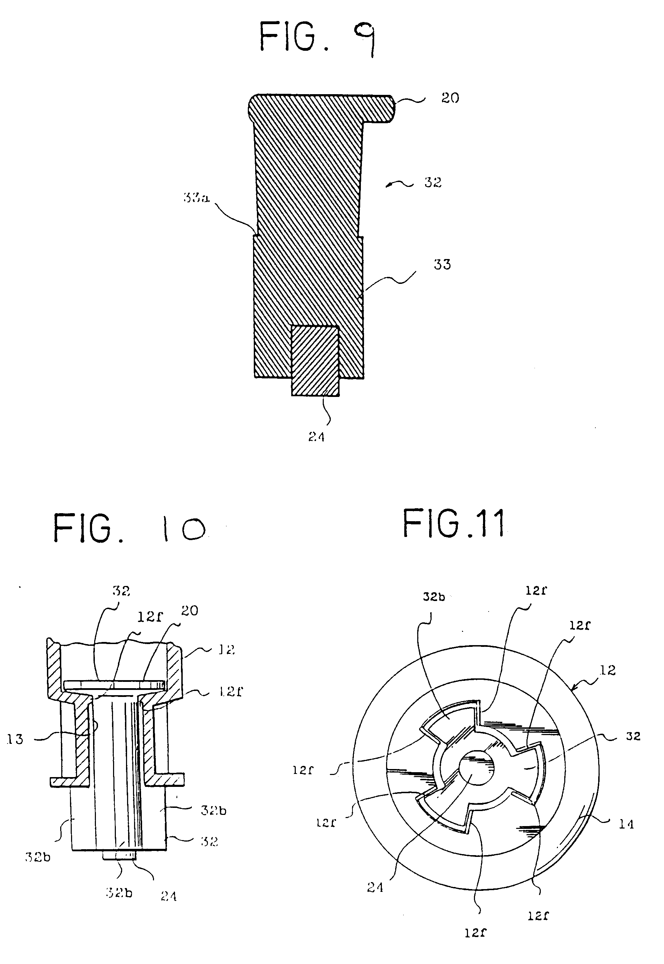

The stud unit will be explained with reference to Fig. 4.

There are grooved three grooves 32a on the outer circumferential face of the stud 32 in the axial direction thereof, so that projections or projected lines 32b are formed on the outer circumferential face of the stud 32. The rear end of each groove 32a is closed; the front end thereof is opened. Projected lines 32b are formed between the grooves 32a. The rear end section of the stud 32 has a stopper section 20. The radius of the stopper section 20 is slightly larger than the radius of the projected lines 32b. There is provided a hard tip 24 at the center of the front end face of each stud 32.

From the midway to the front end of the cylinder 12 there is a small-diameter-cylinder section 12A, which has an uneven section 13 on the inner wall thereof. The uneven section 13 corresponds to an uneven section 33 of the stud 32. There is a narrow gap between the stud 32 and the small-diameter-cylinder section 12A. The rear section of the cylinder 12 is a large-diameter-cylinder section 12B. There is formed a step 16 at the border between the small- and the large-diameter-cylinder sections 12A and 12B. The step 16 engages with the stopper section 20 to retain stud 32 in cylinder 12.

There is provided a spring 30 as an elastic member between the rear end face of the stopper section 20 of the stud 32 and the bottom face 12b of the cylinder 12 so as to blase the stud 32 outward.

The stud units 10 are, as described above, fitted in the treads 11d of the tire 11 but the tip 24 and the front end section of each stud 32 are projected from the tread 11d. Note that, only the tip 24 of the stud 32 may be projected therefrom.

Successively, the function of the stud units, which are adapted to a vehicle's tires, will be explained.

First, the case of dry road and fixed speed will be explained.

Upon rotation of the tire 11, the front end of the studs 32 contact a surface of a road with the tread 11d in order. The weight of the vehicle works on the stud 32 contacting the road. The stud 32 contacting the road is pushed into the cylinder 12 against the elasticity of the spring 30 by the weight of the vehicle (see Fig. 5). At that time the stud 32 is biased outward by the elasticity of the spring 30 but the elasticity thereof is so small that the stud 32 does not damage the road.

If the stud 32 leaves the road with the rotation of the tire 11, the front end of the stud 11 is projected from the tread 11d by the spring 30.

On a dry road, friction is large, so the tread 11d holds the surface of the road, so that whole of the torque of the tire 11 works as a thrust. The stud 32 contacting the dry road receives the counter force from the road toward the center of the tire without receiving horizontal force for inclining the stud 32, so that the stud 32 is smoothly retracted into the cylinder 12.

On the dry road, when the brake is applied, friction is large, so the treads 11d holds the surface of the road without slip. Note that, the braking shock is almost absorbed by the treads 11d, so quite a small horizontal force works on the front end of the stud 32 but the stud 32 is retracted into the cylinder 12 against the elasticity of the spring 30 by the weight of the vehicle when the stud contacts the road.

On the other hand on snow- or ice-covered road, the tire is apt to slip because of low frictional efficiency.

At fixed speed the tire 11 does not slip even on the snow- or ice-covered road. The front end of the stud 32 contacting slightly bites the snow or ice surface because the stud 32 is biassed outward by the spring 30. Therefore, the stud 32 can keep the frictional force even if the treads 11d of the tire 11 slip when the brake is applied.

If the brake is applied on a slippery road, the part of the treads 11d which contact the road slips in the S direction. At that time counter force "F" works on the section of the tire contacting the road. The force "F" becomes driving force working to the surface of the road by the treads 11d contacting the dry road; the force F works on the front ends of some studs 32 contacting the road when the treads 11d slips thereon.

Imaged force working to the front end of one of the studs 32 in the counter direction of "S" is defined as "f" here. If the force "f" works to the front end of the stud 32, the stud 32 inclines in the couter direction of "S" and the uneven section 33 on the outer circumferential face of the stud 32 engages with the front fringe 12a as an engage section of the uneven section 13 on the inner face of the cylinder 12. The spring 30 partially transforms with inclination of the stud 32. With this transformation, the stud 32 is kept projecting even the weight of the vehicle works to the stud 32 downward. Note that, as described above, the front end of the stud 32, which is biased by the spring 30, slightly bites the surface of the snow- or ice-covered road, so that the studs 32 secure the braking action of the tire 11 (see Fig. 6).

The speed of the tire 11 is reduced upon braking. The tire 11 slips on the road then, the force "f" working to the studs 32 contacting the road also reduces, so that the treads 11d hold the surface of the snow- or ice-covered road at low speed and the slip is prevented. The projected length of the studs 32 contacting the road are respectively different because of the variation of the force "f" working.

When the treads 11d of the tire 11 do not slip, the force "f" working to the stud 32 contacting becomes small, so that the stud 32 retracts into the cylinder 12. When the vehicle stops, the force f disappears and the stud 32 receives the weight of the vehicle only. The front end of the stud 32 slightly bites the surface of snow or ice by the elasticity of the spring 30.

When the inclined stud 32 biting the surface leaves the road, the horizontal force "f" disappears, and the spring 30 transformed springs back to the original form. With this spring back, the spring 30 presses the stopper section 20 to quickly return the stud 32 to the position, in which the axis of the studs 32 coincides with the axis of the cylinder 12, so that the stud 32 projects.

In case of acceleration or starting on the snow- or ice covered road, especially on a slope, the torque of the tire 11 works to the road and the vehicle moves forward. If the tire 11 slips, the force "f" in the forward direction (counter direction of stopping) works to a part of the tire 11, so that the stud 32 engages with the fringe 12a of the cylinder 12, and the stud 32 is kept projecting to secure the frictional force. Therefore, the slip of the tire 11 can be prevented.

In the above description, the stud 32 inclines and the uneven section lines 33 on the outer circumferential face of the stud 32 engage with the uneven section 13 on the inner face of the cylinder 12 to keep the stud 32 projecting when the force "f" works to the front end of the stud 32. Further, the uneven section 33 of the stud 32 engages with the fringe 12a as the engage section of the uneven section 13 of the cylinder 12.

Even if sand, etc. enter the gap between the cylinder 12 and the stud 32 of the stud unit 10, the sand is removed because of the centrifugal force of the tire 11 rotating at high speed and the reciprocative movement of the stud 32.

Next, other features of the stud unit will be described.

Fig. 7, illustrates that the transverse sectional shape of the tip 24 at the front end of the stud 32 may be formed as a triangle shape. When the brake is quickly applied, the moment works to the stud to rotate and to prevent from retracting into the cylinder 12.

In Fig. 8, the stud unit 10 has a mouth piece 12g, which is made of material harder than the material of the cylinder 12, at the fringe 12a of the cylinder 12. The stopper section 20 for engaging with the step 16 of the cylinder 12 may be projected inward and all round.

Fig. 9 shows a longitudinal sectional view of the stud 32 of the stud unit 10. There is formed a circumferential engage-step 33a at the midway of the uneven section 33. The engage-step 33a engages with the fringe 12a of the cylinder 12 when the stud 32 inclines. The engage-step 33a may be formed on the projected lines 32b or the grooves 32a.

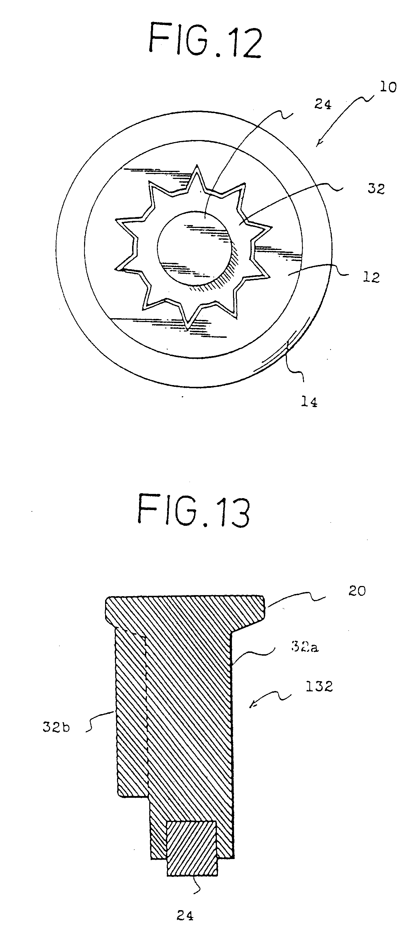

Fig. 10 and 11, show that the stud unit 10 has projections 12f, which support both sides of a projected line 32b of the stud 32, at the step of the cylinder 12. Both side faces of the projected line 32b do not contact the uneven section 13 of the cylinder 12, so that the stud 32 can be moved smoothly. The number of the projected lines 32b of the stud 32 and the grooves on the inner face of the small-diameter-cylinder section 12A are not limited. Fig. 12 shows that a stud 32 may have many projected lines.

Fig. 13 shows a sectional view of a stud according to another embodiment. The projected line 32b on the outer circumferential face is formed until midway thereof, not until the lower end. The projected line 32b of the stud 132 may be formed at least a section corresponding to a sliding section of the small-diameter-cylinder section 12A.

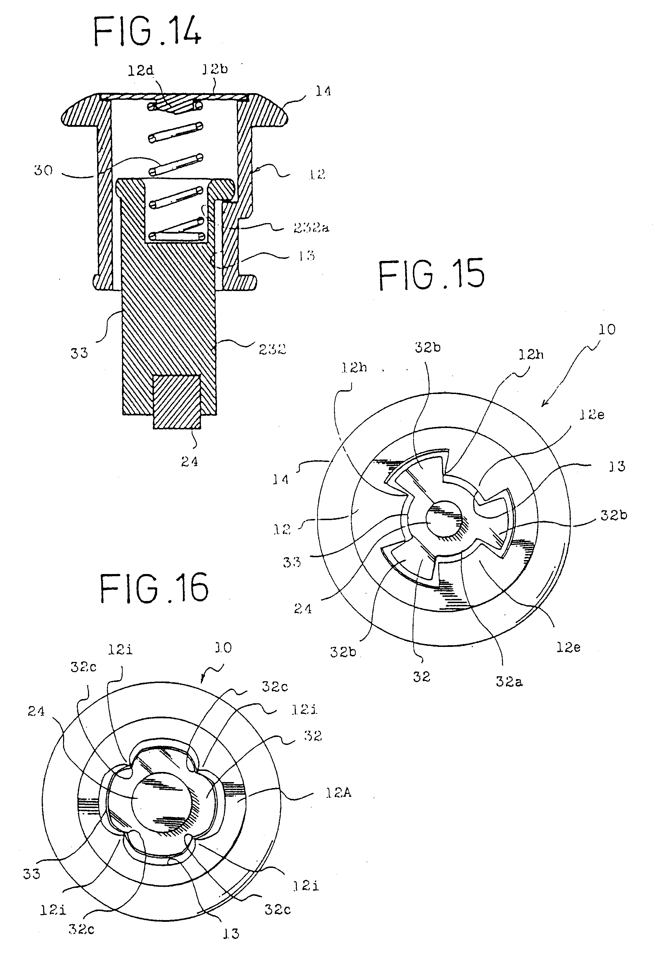

Fig. 14 shows a sectional view of another stud unit 10. A hole 232a is bored in the axial direction of the stud 232 at the rear end thereof. The front end of the spring 30 is inserted into the hole 232a; the rear end of the spring 30 is fitted to a projected section 12d, which is projected inward on the bottomface 12b of the cylinder 12, so as not to move.

In Fig. 15, shows how both edges of the projected line 12e of the small-diameter-cylinder section 12A may be formed at an acute angle as sharp edges 12h so as to support the base section of the projected line 32b of the stud 32. When the stud 32 inclines, the front ends of the sharp edges 12h engage with the uneven section 33 of the stud 32 to keep the stud projecting.

Fig. 16 shows a bottom view of a stud unit according to another embodiment. Four narrow grooves 32c are grooved in the axial direction of the stud 32 on the outer circumferential face thereof; four projected lines 12i, whose ridges are sharply formed so as to fit in the grooves 32c of the stud 32, are provided on the inner face of the small-diameter-cylinder section 12A of the cylinder 12. The edge of the projected lines 12i on the fringe 12a side are engaged with the stud 32 so as to prevent the stud 32 from retracting into the cylinder 12 when the stud 32 inclines.

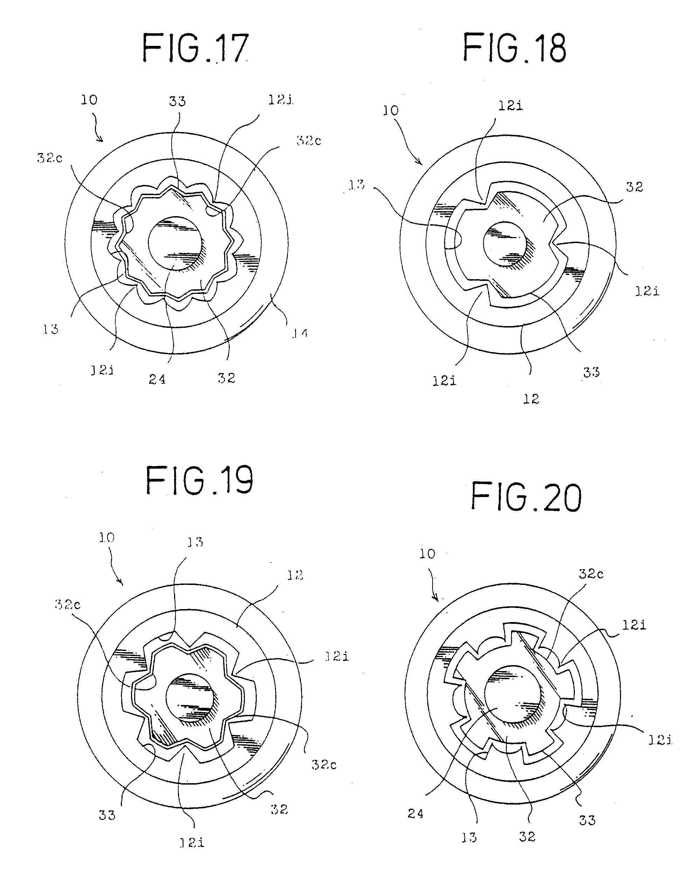

Fig. 17, shows a different form of grooves 32c of the stud 32 and projected lines 12i on the inner face of the cylinder 12, in which there are two or more (cf. Fig 16) .

Figs. 18-20, show different forms of ridges of the sharp projected lines 12i for the cylinder 12. Here they are sharply formed as the examples of Figs. 16 and 17.

Fig. 21 illustrates another form of the projected lines. There are grooved three grooves 12j on the inner face of the small-diameter-cylinder section 12A; there are formed projected lines 32d, each of which is like two mountains, corresponding to the grooves 12j. The two ridges of each projected line 32d are sharply formed. When the stud 32 inclines, the projected lines 32d engages with the fringe 12a so as to prevent the stud 32 from retracting into the cylinder 12 because of sharp ridges of the projected lines 32d of the stud 32.

Fig. 22 illustrates another form of the projected lines for the stud unit 10. There are formed projected lines and grooves like zigzag form on the inner face of the small-diameter-cylinder section 12A of the cylinder 12, and the projected lines and grooves on the outer circumferential face of the stud are also formed in zigzag form. The stud 32 is inserted into the cylinder 12 with play. The largest outer diameter of the stud 32 is smaller than the smallest inner diameter of the small-diameter-cylinder section 12A, so that the stud 32 has much play. With this much play, uneven sections of the both are mutually engaged and the uneven section of the stud 32 engages with the fringe 12a of the cylinder 12 when the stud quitely inclines.

Note that, in all embodiments, there may be provided projected section on the front end face of the stud instead of the tip. The cylinder and the stud may be made of ceramics or plastics. Also, the elastic member need be not only a spring but could be rubber, etc.

Further, grooved slits may be provided in the axial direction of the cylinder on the outer circumferential face thereof so as to reduce the weight of the stud unit.

## Claims

1. A stud unit (10) for fitting into a hole bored in an outer circumferential face of a tire (11), said unit (10) comprising:
a cylinder (12) having a closed rear end (12b) and an open front end (12a) and an engage section (16) on its inner circumferential wall, a plurality of axially extending projections (12e) being formed on the inner wall of the cylinder (12) from midway along the cylinder (12) toward its open front end (12a) and at regular intervals in the circumferential direction of the cylinder;
a stud (32) located in said cylinder (12) so as to be axially movable therein with play, said stud (32) having a front end (24) and a stopper section (20) at its rear end for cooperating with the engage section (16) of the cylinder (12) so as to prevent release of the stud (32) through the open end (12a) of the cylinder (12); and
elastic means (30) acting between the closed rear end (12b) of the cylinder (12) and the stopper section (20) of the stud (32) for biasing the stopper section (20) of the stud (32) so that the front end (24) of the stud (30) projects from the open front end (12a) of the cylinder (12):
characterised in that the stud (32) has axially extending projections (32b) on its outer circumferential wall which locate between projections of the cylinder (12) with play and in that the cylinder has projections (12f) at the engage section (16) which support either side of stud projections (32b).

2. A stud unit (10) according to claim 1, wherein the projections (12e) on the inner wall of the cylinder (12) are tapered in transverse section.

3. A stud unit according to claim 1 or 2, wherein the projections (32b) on the outer circumferential face of the stud (32) are tapered in transverse section.

4. A stud unit according to any preceding claim, further comprising a mouth piece (12g) made of hard material provided at the front end (12a) of the cylinder (12).

5. A stud unit according to any preceding claim, further comprising a hard tip provided at the front end (24) of the stud (32).

6. A stud unit according to claim 5, wherein the tip of the stud (32) is triangular in transverse section.

7. A skid-proof tire provided with stud units (10) as claimed in any preceding claim.

## Patentansprüche

1. Stifteinheit (10) zum Einpassen in ein Loch, das in eine Außenumfangsfläche eines Reifens (11) gebohrt ist, wobei die Einheit (10) umfaßt:
einen Zylinder (12) mit einem geschlossenen Hinterende (12b) und einem offenen vorderende (12a) und einem Eingriffsabschnitt (16) auf seiner Innenumfangswandung, wobei eine Mehrzahl von axial verlaufenden Vorsprüngen (12e) auf der Innenwandung des Zylinders (12) von der Längenmitte längs des Zylinders (12) zu seinem offenen Vorderende (12a) hin und in regelmäßigen Abständen in der Umfangsrichtung des Zylinders gebildet ist;
einen Stift (32), der sich in dem Zylinder (12) befindet, so daß er darin mit Spiel axial bewegbar ist, wobei der Stift (32) ein Vorderende (24)und einen Anschlagabschnitt (20)an seinem Hinterende aufweist, welcher Anschlagabschnitt (20) mit dem Eingriffsabschnitt (16) des Zylinders (12) zusammenwirkt, um ein Ausrücken des Stifts (32) durch das offene Ende (12a) des Zylinders (12) hindurch zu verhindern; und
ein zwischen dem geschlossenen Hinterende (12b) des Zylinders (12) und dem Anschlagabschnitt (20) des Stifts (32) wirkendes elastisches Mittel (30), das den Anschlagabschnitt (20) des Stifts (32) vorspannt, so daß das Vorderende (24) des Stifts (32) aus dem offenen Vorderende (12a) des Zylinders (12) vorsteht;
dadurch gekennzeichnet, daß der Stift (32) axial verlaufende Vorsprünge (32b) auf seiner Außenumfangswandung aufweist, welche sich zwischen Vorsprüngen des Zylinders (12) mit Spiel befinden, und daß der Zylinder Vorsprünge (12f) in dem Eingriffsabschnitt (16) aufweist, welche jede Seite von Stiftvorsprüngen (32b) abstützen.

2. Stifteinheit (10) nach Anspruch 1, bei welcher die Vorsprünge (12e) auf der Innenwandung des Zylinders (12) im Querschnitt konisch sind.

3. Stifteinheit nach Anspruch 1 oder 2, bei welcher die Vorsprünge (32b) auf der Außenumfangsfläche des Stifts (32) im Querschnitt konisch sind.

4. Stifteinheit nach einem der vorhergehenden Ansprüche, welche ferner ein aus hartem Material bestehendes Mundstück (12g) umfaßt, das an dem Vorderende (12a) des Zylinders (12) vorgesehen ist.

5. Stifteinheit nach einem der vorhergehenden Ansprüche, welche ferner eine harte Spitze umfaßt, die an dem Vorderende (24) des Stifts (32) vorgesehen ist.

6. Stifteinheit nach Anspruch 5, bei welcher die Spitze des Stifts (32) im Querschnitt dreieckig ist.

7. Rutschsicherer Reifen, welcher mit Stifteinheiten (10) nach einem der vorhergehenden Ansprüche versehen ist.

## Revendications

1. Unité de clou (10) prévu pour l'adaptation dans un trou percé dans une face circonférentielle extérieure d'un bandage (11), ladite unité (10) comprenant :
un cylindre (12) ayant une extrémité arrière fermé (12b) et une extrémité avant ouverte (12a) et une section de mise en prise (16) sur sa paroi circonférentielle intérieure, une pluralité de saillies (12e) s'étendant axialement étant réalisée sur la paroi intérieure du cylindre (12) à mi-distance le long du cylindre (12) vers son extrémité avant ouverte (12a) et à des intervalles réguliers dans la direction circonférentielles du cylindre ;
un clou (32) situé dans ledit cylindre (12) de façon à être déplaçable axialement dans celui-ci avec un certain jeu, ledit clou (32) ayant une extrémité avant (24) et une section d'arrêt (20) à son extrémité arrière pour coopérer avec la section de mise en prise (16) du cylindre (12) de façon à empêcher une libération du chou (32) à travers l'extrémité ouverte (12a) du cylindre (12) ; et
un moyen élastique (30) agissant entre l'extrémité arrière fermée (12b) du cylindre (12) et la section d'arrêt (20) du chou (32) pour solliciter la section d'arrêt (20) du chou (32) de telle sorte que l'extrémité avant (24) du chou (30) fait saillie depuis l'extrémité avant ouverte (12a) du cylindre (12) ;
caractérisée en ce que le clou (32) a des saillies (32b) s'étendant axialement sur sa paroi circonférentielle extérieure qui sont situées entre les saillies du cylindre (12) avec un certain jeu et en ce que le cylindre a des saillies (12f) à la section de mise en prise (16) qui supportent chaque côté des saillies de chou (32b).

2. Unité de clou (10) selon la revendication 1, dans laquelle les saillies (12e) sur la paroi intérieure du cylindre (12) diminuent en section transversale.

3. Unité de clou selon la revendication 1 ou 2, dans laquelle les saillies (32b) sur la face circonférentielle extérieure du clou (32) diminuent en section transversale.

4. Unité de clou selon l'une des revendications précédentes, comprenant en outre une embouchure (12g) réalisée en un matériau dur prévu à l'extrémité avant (12a) du cylindre (12).

5. Unité de clou selon l'une des revendications précédentes, comprenant en outre une pointe dure prévue à l'extrémité avant (24) du clou (32).

6. Unité de clou selon la revendication 5, dans laquelle la pointe du clou (32) est triangulaire en section transversale.

7. Bandage pneumatique anti-dérapant pourvu d'unités de clou (10) telles que revendiquées dans l'une quelconque des revendications précédentes.
